# EUROPEAN PATENT APPLICATION

(11) **EP 4 345 197 A2**
(43) Date of publication of application: **03.04.2024**
(21) Application number: 23194674.0
(22) Date of filing: 31.08.2023
(51) Int. Cl.: C25B 1/23, C25B 9/23, C25B 11/054, C25B 11/065, C25B 11/075, C25B 11/081

(54) **CO2-REDUCTION MEMBRANE ELECTRODE ASSEMBLY INCLUDING CATION EXCHANGE MEMBRANE, CO2-REDUCTION ASSEMBLY INCLUDING SAME MEA, AND METHOD OF MANUFACTURING SAME MEA**

(30) Priority: 08.09.2022 KR 20220114093
(71) Applicant: Korea Institute of Science and Technology, Seoul 02792 (KR)
(72) Inventor: Oh, Hyung-Suk, Seoul (KR); Lee, Woong-Hee, Seoul (KR); Lee, Ung, Seoul (KR); Koh, Jai-Hyun, Seoul (KR); Lee, Dong-Ki, Seoul (KR); Won, Da-Hye, Seoul (KR); Min, Byoung-Koun, Seoul (KR)
(74) Representative: Frenkel, Matthias Alexander

(57) **Abstract**

Proposed is a CO2-reduction membrane electrode assembly (MEA), which is a novel MEA capable of changing a reaction condition to an alkaline condition from a problematic acidic condition unfavorable to reactions on a cathode side during catalytic reactions using a cation exchange membrane (CEM) as a separator. In addition, the MEA can reduce a hydrogen evolution reaction (HER), which is a side reaction. In addition, a method of manufacturing the MEA, and a CO2-reduction assembly including the MEA are also proposed.

## Description

### CROSS REFERENCE TO RELATED APPLICATION

The present application claims priority to Korean Patent Application No. 10-2022-0114093, filed September 8, 2022, the entire contents of which is incorporated herein for all purposes by this reference.

### BACKGROUND OF THE DISCLOSURE

### 1. Field of the Disclosure

The present disclosure relates to a membrane electrode assembly (MEA) including a cation exchange membrane, a method of manufacturing the MEA, and a COz-reduction assembly including the MEA. In particular, the present disclosure relates to a novel MEA capable of solving problems occurring in use of a cation exchange membrane by improving a cathode catalyst layer.

### 2. Description of the Related Art

With increasing COz emissions attributed to increasing use of fossil fuels, global warming is worsening, and research has been thus conducted to solve the concerning problems.

Electrochemical COz reduction reactions (hereinafter, referred to as "CO₂ RR") are attracting attention as a method for reducing COz and converting COz into high value-added compounds, such as CO and ethylene. COz RR technology to which cation exchange membranes and/or anion exchange membranes are applied has drawn attention due to high scalability and low resistance between electrodes.

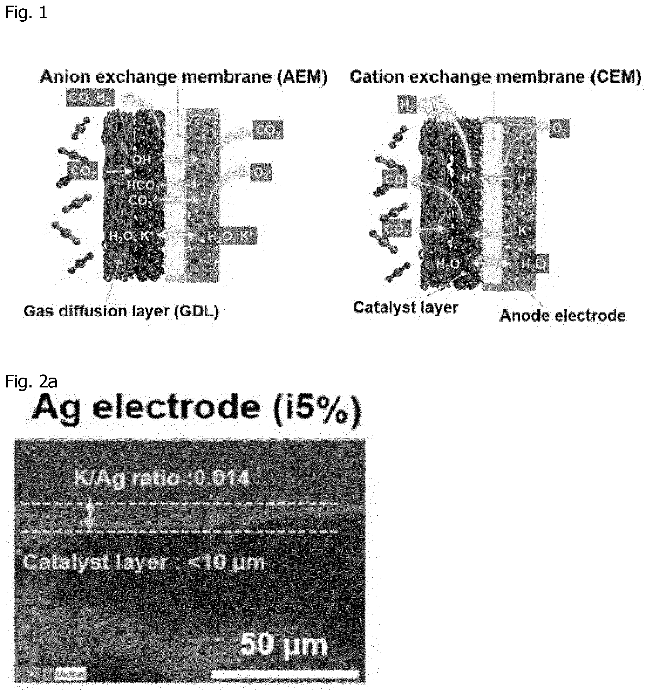

FIG. 1 is a schematic diagram illustrating a difference between COz RR reactions to which an anion exchange membrane (AEM, left diagram) and a cation exchange membrane (CEM, right diagram) are each independently applied.

In the past few decades, significant progress has been made in the development of COz RR-based electrode assemblies that use anion exchange membranes. Electrode assemblies using anion exchange membranes are known as an assembly for converting COz into useful substances, such as CO and ethylene, due to high selectivity and current density. However, anions, such as HCO³⁻ and CO2²⁻, and liquid products generated in the COz RR process with the use of the anion exchange membrane cross over through the anion exchange membrane, so COz conversion rate is limited. In addition, there is a problem in that the anion exchange membrane has poor mechanical stability and chemical stability, and thus has a low potential of being industrialized. In addition, there is a disadvantage in the COz RR-based electrode assembly to which the anion exchange membrane is applied in that additional processes including capturing and reusing COz are required on an anode side due to the crossover of COz.

Recently, membrane electrode assemblies (MEAs) using cation exchange membranes (CEMs), such as Nafion, have been preferred to overcome the limitations of the anion exchange membranes (AEMs). A CEM is a membrane which has been widely used in electrochemistry due to high stability and proton conductivity. To reduce COz, maintaining alkaline conditions during reduction reactions is beneficial, but the high proton conductivity of the CEM leads to an acidic reaction condition on a cathode side. As a result, there are problems in that hydrogen evolution reactions (HERs) are promoted while reducing the selectivity of COz RR.

### SUMMARY OF THE INVENTION

An objective of the present disclosure is to provide a novel membrane electrode assembly (MEA) including a cation exchange membrane.

Particularly, in terms of the COz-reduction MEA including the cation exchange membrane, an objective of the present disclosure is to provide a technology capable of solving problems occurring in use of an existing cation exchange membrane. The problems are that the conversion rate of COz is low due to an acidic condition on a cathode side during a reduction reaction, and a hydrogen evolution reaction (HER), which is a side reaction, occurs on the cathode side.

In addition, another objective of the present disclosure is to provide a COz-reduction assembly including the MEA.

In addition, a further objective of the present disclosure is to provide a method of manufacturing the MEA.

The present disclosure provides a COz-reduction membrane electrode assembly (MEA) including: a cathode layer including a gas diffusion layer (GDL) and a catalyst layer; a cation exchange membrane (CEM); and an anode layer including an oxidation catalyst, in which the catalyst layer of the cathode layer includes a reduction catalyst, a carbon-based mixture, an anion exchange ionomer, and a cation,

Particularly, the reduction catalyst may include at least one selected from among silver (Ag), gold (Au), zinc (Zn), copper (Cu), and indium (In).

Particularly, the reduction catalyst may be applied on the gas diffusion layer in an amount in a range of 0.5 mg/cm² to 3 mg/cm².

Particularly, the carbon-based mixture may include at least one selected from among carbon black, carbon nanotubes, graphene, carbon nanofibers, and graphited carbon black.

Particularly, the carbon-based mixture may be included in an amount of 20 parts to 500 parts by weight with respect to 100 parts by weight of the reduction catalyst.

Particularly, the anion exchange ionomer may be included in an amount of 50 parts to 300 parts by weight with respect to 100 parts by weight of the reduction catalyst.

Particularly, the cation may include at least one cation selected from among Na, K, Cs, and tetramethylammonium (TMA).

Particularly, the cation may be included in an amount of 0.01 parts to 5 parts by weight with respect to 100 parts by weight of the reduction catalyst.

Particularly, the reduction catalyst is a nanoparticle form having a size of 10 nm or less, a secondary particle form in which the nanoparticles aggregate, a single particle form having an average particle size in a range of 0.01 µm to 2 µm, or a combination thereof.

In addition, the present disclosure provides a COz-reduction assembly including the MEA.

In addition, the present disclosure provides a method of manufacturing the COz-reduction MEA, the method including: preparing a gas diffusion layer; coating the gas diffusion layer with a solution in which a reduction catalyst, an anion exchange ionomer, and a carbon-based mixture are mixed; impregnating the gas diffusion that is coated with the reduction catalyst, the anion exchange ionomer, and the carbon-based mixture with a cation solution to form a cathode layer in which a cation is intercalated; and stacking a cation exchange membrane and an anode layer on the cathode layer.

In addition, the present disclosure provides a method of manufacturing the COz-reduction MEA, the method including: preparing a gas diffusion layer; coating the gas diffusion layer with a solution in which a reduction catalyst, an anion exchange ionomer, a cation, and a carbon-based mixture are mixed to form a cathode layer; and stacking a cation exchange membrane and an anode layer on the cathode layer.

A membrane electrode assembly (MEA) using a cation exchange membrane, according to the present disclosure, has high current density and selectivity, and can be thus effectively used in COz reduction reaction (COz RR) system.

In particular, as a result of an experiment of the present disclosure, it was discovered that the greater each amount of an anion exchange ionomer and a carbon-based mixture, the higher the pH, thus leading to an alkaline condition. As a result, it is seen that COz RR occurs efficiently.

In particular, as a result of the experiment of the present disclosure, a sample of Examples in which a catalyst layer was impregnated with cations exhibited higher CO selectivity than that of Comparative Examples in which no cations were intercalated. As a result, it is confirmed that impregnation with the cations is significantly important in increasing CO selectivity.

### BRIEF DESCRIPTION OF THE DRAWINGS

FIG. 1 is a schematic diagram illustrating a difference in COz RR reactions to which an anion exchange membrane (AEM, left diagram) and a cation exchange membrane (CEM, right diagram) are each independently applied;

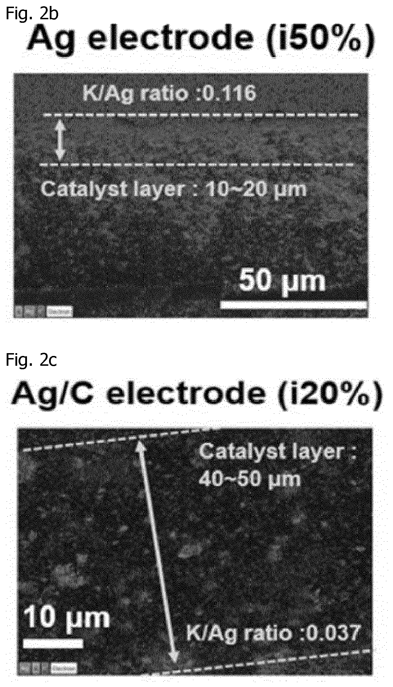

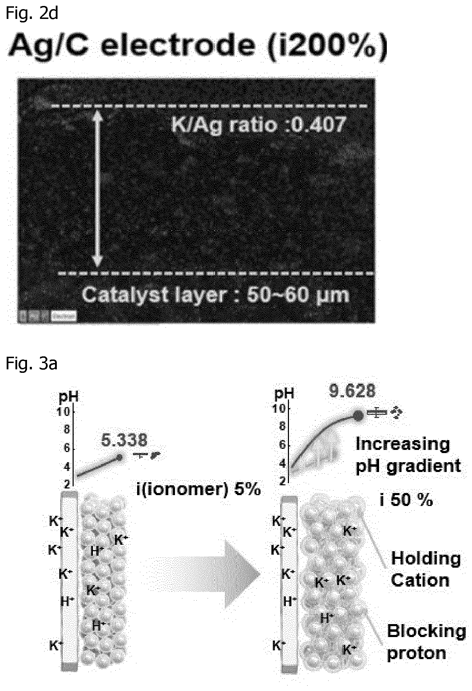

FIGS. 2A, 2B, 2C, and 2D are diagrams showing analysis results of scanning electron microscope (SEM) and energy-dispersive spectroscopy (EDS), the analysis performed respectively after catalytic reactions on a sample of Comparative Example 1 (Ag electrode (i5%)), a sample of Comparative Example 2 (Ag electrode (i50%)), a sample of Example 1 in which 20% by weight of an anion exchange ionomer is included with respect to the weight of a metal nanoparticle catalyst, and a sample of Example 1 in which 200% by weight of the anion exchange ionomer is included with respect to the weight of the metal nanoparticle catalyst;
FIG. 3A is a diagram showing pH measurement results for samples of Comparative Example 1 (left diagram) and Comparative Example 2 (right diagram), and FIG. 3B is a diagram showing pH measurement results for samples of Comparative Example 2 (left diagram) and Example 1 (right diagram);
FIG. 4A is a graph showing results of a CO selectivity test according to an increasing amount of an anion exchange ionomer for samples of Example 1 in which a Ag: carbon weight ratio is fixed to 1:1, and FIG. 4B is a graph showing results of CO selectivity test for a sample of Comparative Example 1 (Ag black) and two samples of Example 1;
FIG. 5 is a graph showing results of a CO selectivity test according to a varying amount of an anion exchange ionomer for samples of Example 1;
FIG. 6 is a graph showing results of a CO selectivity test for a sample of Comparative Example 3 in which cations are not intercalated;
FIGS. 7A to 7D are graphs showing results of CO selectivity and cell voltage test for a catalyst electrode manufactured in Example 2 according to types of electrolyte using a COz conversion device, in which 0.5 M KHCO₃ and 0.5 M CsHCO₃ are introduced as electrolytes in FIGS. 7A (CO selectivity) and 7B (cell voltage), and 0.5 M KHCO₃ and 0.05 M tetramethylammonium (TMA) HCO₃ are introduced as electrolytes in FIGS. 7C (CO selectivity) and 7D (cell voltage); and
FIG. 8 is a graph showing results of a catalytic durability test for membrane electrode assembly (MEA) including a cation exchange membrane and an electrode catalyst of Example 1.

### DESCRIPTION OF THE PREFERRED EMBODIMENTS

The present disclosure provides a COz-reduction membrane electrode assembly (MEA) including: a cathode layer including a gas diffusion layer (GDL) and a catalyst layer; a cation exchange membrane (CEM); and an anode layer including an oxidation catalyst. The catalyst layer of the cathode layer includes: a reduction catalyst; a carbon-based mixture; an anion exchange ionomer; and cations.

The MEA may be combined with a COz supply unit on a cathode side and a water supply unit on an anode side to manufacture a COz-reduction assembly.

In a COz-reduction device to which the MEA of the present disclosure is applied, an oxygen evolution reaction (OER) may occur on the anode side through water electrolysis. In addition, CO may be produced through a COz reduction reaction (COz RR) by introducing humidified COz gas into the cathode side. The COz-reduction device may include a COz-reduction electrode catalyst for using the cation exchange membrane, and thus can have high selectivity.

In the COz-reduction device, a catalyst, such as iridium oxide, that is beneficial to the oxygen evolution reaction is used as an anode and applied on a metal mesh. Using the cation exchange membrane, an electrolyte membrane is formed in the middle of both of the electrodes to prevent products generated from the cathode and the anode from being mixed.

The COz-reduction MEA, which is an assembly of the anode layer, the cathode layer, and the membrane, is a conventionally well-known technology, so detailed descriptions of each component will be omitted.

While the present disclosure includes the cation exchange membrane, a technique for improving the cathode layer is disclosed to solve a problem caused when the cation exchange membrane is used, the problem of the cathode side acidified during reactions. The cathode layer of the present disclosure includes the gas diffusion layer (GDL) and the catalyst layer, the same as in the related art. Furthermore, the catalyst layer includes the carbon-based mixture, the anion exchange ionomer, and the cations, in addition to the reduction catalyst.

### Reduction catalyst

Typically, metal nanoparticles are used as the reduction catalyst. The metal nanoparticles are components with catalytic activity capable of reducing COz. For example, the metal nanoparticles may include at least one selected from among gold (Au), silver (Ag), zinc (Zn), copper (Cu), indium (In), and alloys thereof, and examples of the metal nanoparticles are not limited thereto. For example, the metal nanoparticles may be silver nanoparticles. Silver (Ag) has high selectivity and current density and can thus reduce COz to produce CO. An amount of the metal nanoparticles per unit area of the gas diffusion layer in a range of 0.5 mg/cm² to 3 mg/cm² may be applied on the gas diffusion layer. The metal nanoparticle may be an excessively small nanoparticle form having a size of about 10 nm or less, for example, in a range of 1 nm to 10 nm, a secondary particle form in which the excessively small nanoparticles aggregate, a single particle form having an average particle size in a range of 0.01 µm to 2 µm, or a combination thereof. For example, the metal particles may be a combination of the excessively small nanoparticle form having a size of several nm or less and being present on a surface of the carbon-based mixture and the secondary particle form in which the nanoparticles aggregate. The aggregated secondary particles may have an average particle size, for example, in a range of 0.05 µm to 1.5 µm, and specifically, in the range of 0.1 µm to 1 µm. The metal nanoparticle form is not limited thereto, and may be present in any form.

### Carbon-based mixture

The carbon-based mixture may include, for example, at least one selected from among carbon black, carbon nanotubes, graphene, carbon nanofibers, and graphitized carbon black. Particularly, carbon black may be used as the carbon-based mixture to help improve current density. In the present disclosure, the carbon-based mixture may increase a thickness of an electrode catalyst layer to increase pH of the electrode, thereby increasing COz reduction efficiency. In the present disclosure, the carbon-based mixture may be included in an amount of 20 parts to 500 parts by weight with respect to 100 parts by weight of the metal nanoparticles, which is the reduction catalyst. In the above numerical range, the carbon-based mixture mixed with the metal nanoparticles may effectively increase a thickness of a metal nanoparticle layer, thereby maintaining high pH and exhibiting high COz RR selectivity.

In the present disclosure, the carbon-based mixture may be mixed with the metal nanoparticles, which is the reduction catalyst, in a solvent and then applied on the gas diffusion layer.

### Anion exchange ionomer

The anion exchange ionomer may surround a periphery of metal particles and cover a surface of the metal particles. The anion exchange ionomer may be included in an amount of 50 parts to 300 parts by weight with respect to 100 parts by weight of the metal nanoparticles. In the above numerical range, the anion exchange ionomer mixed with the metal nanoparticles may effectively surround the surface of the metal nanoparticles while inhibiting the transfer of hydrogen ions (H⁺), thereby exhibiting high COz RR selectivity.

Examples of the anion exchange ionomer may include XA-9, XC-1, and XC-2 anion ionomers purchased from Dioxide, FAA-3 anion ionomer purchased from Fumatech, a PiperION anion ionomer, a quaternary ammonium-based polymer, an imidazolium-based polymer, and the like.

### Cation

In the present disclosure, the reduction catalyst is additionally impregnated with the cations, and various cations, such as Na, K, Cs, tetramethylammonium (TMA), and the like, may be used. In the present disclosure, the cations may be included in an amount of 0.01 parts to 5 parts by weight with respect to 100 parts by weight of the metal nanoparticles. Even though the cations may be contained in the catalyst layer through an impregnation method, the cations may be included in the catalyst layer by applying a solution in which the cations are mixed with the reduction catalyst on the gas diffusion layer.

In the present disclosure, the surface of the metal nanoparticles is coated with the carbon-based mixture and the anion exchange ionomer, thereby increasing a thickness of the catalyst surface and inhibiting the transfer of hydrogen ions (H⁺). In addition, the pH of the electrode catalyst surface is maintained to be high because the cations are intercalated, thereby well reducing hydrogen production, compared to an electrode catalyst formed of only metal nanoparticles which are not surface-treated, and improving a current density of the COz RR. The COz-reduction electrode catalyst including the cation exchange membrane has high COz RR selectivity and can be thus effectively applied to COz RR system.

Exemplary embodiments will be described in more detail through the following Examples and Comparative Examples. However, the following Examples and Comparative Examples are only to illustrate the technical spirit, and the scope of the present disclosure is not limited to the embodiment described hereinbelow.

### Example 1

In Example 1, a reduction catalyst, a carbon-based mixture, and an anion exchange ionomer (AEI) were first mixed and then applied on a gas diffusion layer (GDL). Next, cations were applied thereon to prepare a sample. In Example 1, multiple samples were prepared by varying amounts of the carbon-based mixture and the AEI.

In Example 1, a membrane electrode assembly (MEA) in which Nafion was used as a cation exchange membrane was manufactured. Here, 30 mg of silver nanoparticles as the reduction catalyst, 30 mg to 90 mg of carbon black as the carbon-based mixture, and 6 mg to 60 mg of the AEI (XA-9 purchased from Dioxide, same for the following experiments) were dissolved in 2 mL of ethanol and then ultrasonicated for about 20 minutes to prepare a well-dispersed solution. That is, the solution was a mixed solution including the reduction catalyst, the carbon-based mixture, and the AEI.

The mixed solution was applied on the GDL (Sigracet 39BC purchased from Fuelcellstore) including a microporous layer (MPL) in an amount of 1 mg per square cm. Then, the GDL was heated to a temperature of 70°C to quickly dry the applied mixed solution, thereby preparing a catalyst layer.

To impregnate the catalyst layer with cations (K), a corresponding electrode was immersed in a 1 M KOH solution for 2 hours and taken out.

### Example 2

Unlike in Example 1, in Example 2, particles in which a reduction catalyst, cations, and a carbon-based mixture were mixed were first prepared. Then the mixed particles were mixed with an anion exchange ionomer (AEI) and applied on a gas diffusion layer (GDL), thereby preparing a sample.

To synthesize silver nanoparticles impregnated with the cations, 170 mg of Ag nitrate, 100 mL of water, and 100 mg of carbon black were mixed, and 20 mL of 0.1 M KOH solution was added thereto. Next, the resulting solution was filtered after an hour to prepare Ag-K/C particles in which K ions were intercalated.

60 mg of the silver nanoparticles in which the cations and the carbon black were contained and 60 mg of the AEI were dissolved in 2 mL of ethanol and then ultrasonicated for about 20 minutes to prepare a well-dispersed solution. The solution was applied on the GDL (Sigracet 39BC purchased from Fuelcellstore) including a microporous layer (MPL) in an amount of 1 mg per square cm. Then, the GDL was heated to a temperature of 70°C to quickly dry the applied mixed solution, thereby preparing a catalyst electrode.

Even though the cations were contained during the preparation of the mixed particles, the cations were additionally intercalated to increase the density thereof. A corresponding electrode was immersed in a 1 M KOH solution for 2 hours and taken out.

### Comparative Example 1

Unlike Examples, in Comparative Example 1, a carbon-based mixture was not included in a sample.

Silver nanoparticles (with an average particle diameter in a range of 20 nm to 40 nm) were used as an electrode catalyst. 30 mg of the silver nanoparticles were ultrasonicated in 2 mL of ethanol with 5% by weight of an anion exchange ionomer (AEI) with respect to the weight of the silver nanoparticles to prepare a well-dispersed solution. Like Example 1, the solution was applied on the GDL in an amount of 1 mg per square cm. Then, the GDL was heated to a temperature of 70°C to quickly dry the applied solution, thereby preparing a catalyst electrode. To intercalate cations, the electrode was immersed in a 1 M KOH solution for 2 hours and taken out.

### Comparative Example 2

A sample of Comparative Example 2 had greater amount of an anion exchange ionomer (AEI) than the sample of Comparative Example 1.

Silver nanoparticles (Agi) mixed with the AEI were used as an electrode catalyst.

The electrode catalyst in which 30 mg of the silver nanoparticles and 30 mg of the AEI were mixed was ultrasonicated in 2 mL of ethanol to prepare a well-dispersed solution. Like Example 1, the solution was applied on the GDL in an amount of 1 mg per square cm. Then, the GDL was heated to a temperature of 90°C to quickly dry the applied solution, thereby preparing a catalyst electrode. To intercalate cations, the electrode was immersed in a 1 M KOH solution for 2 hours and taken out.

### Comparative Example 3

A sample of Comparative Example 3 included a reduction catalyst and an anion exchange ionomer (AEI) and did not include a carbon-based mixture and cations.

Silver nanoparticles (with an average particle diameter in a range of 20 nm to 40 nm) were used as an electrode catalyst. 30 mg of the silver nanoparticles were ultrasonicated in 2 mL of ethanol with 5% by weight of the AEI with respect to the weight of the silver nanoparticles to prepare a well-dispersed solution. Like Example 1, the solution was applied on the GDL in an amount of 1 mg per square cm. Then, the GDL was heated to a temperature of 70°C to quickly dry the applied solution, thereby preparing a catalyst electrode.

### Experimental Example 1: Evaluation of electrode thickness and intercalated amount of K in electrode

FIGS. 2A, 2B, 2C, and 2D are diagrams showing the analysis results of the scanning electron microscope (SEM) and energy-dispersive spectroscopy (EDS), the analysis performed respectively after the catalytic reactions on the sample of Comparative Example 1 (Ag electrode (i5%)), the sample of Comparative Example 2 (Ag electrode (i50%)), the sample of Example 1 in which 20% by weight of an AEI was included with respect to the weight of a metal nanoparticle catalyst, and the sample of Example 1 in which 200% by weight of the AEI was included with respect to the weight of the metal nanoparticle catalyst.

Referring to FIGS. 2A to 2D, it is confirmed that the greater each of the amounts of the AEI and carbon, the greater the electrode thickness and intercalated amount of K in the electrode. In the case of Comparative Example 1 shown in FIG. 2A, the ratio of the intercalated amount of the K ions to the amount of the silver catalyst was 0.014. On the other hand, in the case of Example 1 shown in FIG. 2D, the ratio of the intercalated amount of the K ions to the amount of the silver catalyst was 0.407, so it was seen that the K ions were well intercalated.

### Experimental Example 2: Evaluation of pH of electrode catalyst

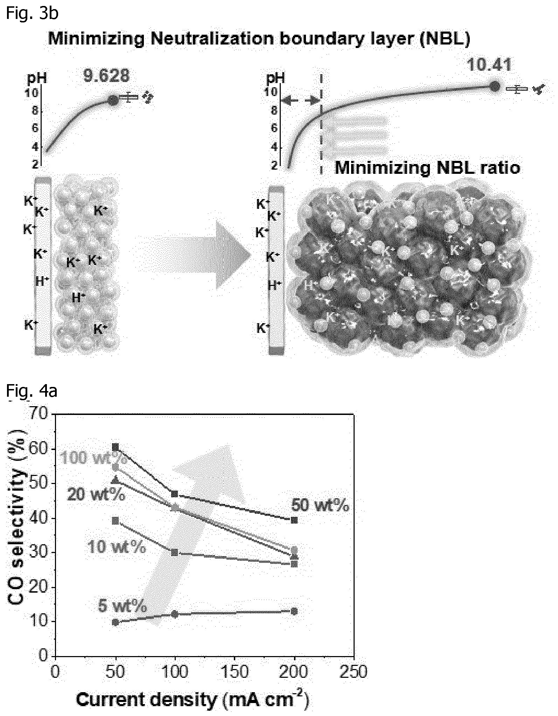

During reactions of the electrode catalysts prepared in Example 1 and Comparative Examples 1 and 2, pH was measured. The analysis results thereof are shown in FIGS. 3A and 3B. FIG. 3A is a diagram showing the pH measurement results for the samples of Comparative Example 1 (left diagram) and Comparative Example 2 (right diagram), and FIG. 3B is a diagram showing the pH measurement results for the samples of Comparative Example 2 (left diagram) and Example 1 (right diagram).

As shown in FIG. 3A, when comparing Comparative Examples 1 and 2, it was confirmed that when the amount of the AEI was sufficient, the pH of the electrode was high. As shown in FIB. 3B, when comparing Example 1 (right diagram) and Comparative Example 2 (left diagram), it is confirmed that when the carbon-based mixture is present in the electrode catalyst, the pH of the electrode is high.

### Experimental Example 3: Evaluation result of CO₂ conversion performance

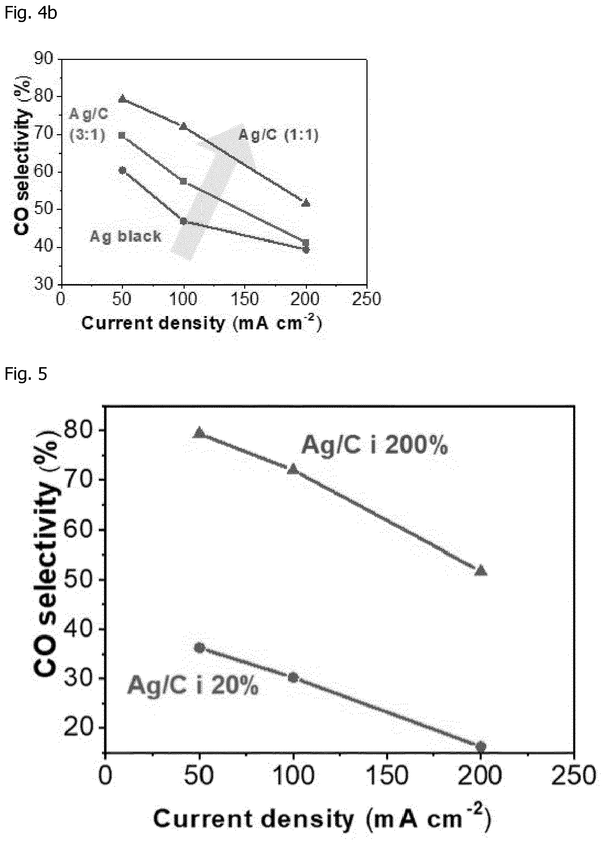

To examine COz conversion performance and CO production performance of the electrode catalysts prepared in Example 1 and Comparative Examples 1, 2, and 3, CO selectivity according to the amount of an AEI and CO selectivity according to the amount of a carbon-based mixture are shown in FIGS. 4A and 4B. In the system used in this experiment, Nafion 212 was used as a cation exchange membrane, and IrOz was used as an anode catalyst and was applied on a GDL. 1M KHCO₃ as an electrolyte was introduced into an anode, and 200 ccm of COz was introduced into a cathode.

FIG. 4A is a graph showing the results of a CO selectivity test according to an increasing amount of the AEI for the samples of Example 1 in which a Ag:carbon weight ratio is fixed to 1:1. The results showed that the greater the amount of the AEI, the higher the CO selectivity, that is, a COz conversion rate.

FIG. 4B is a graph showing the results of a CO selectivity test for the sample of Comparative Example 1 (Ag black) and the two samples of Example 1. The Ag/C (3:1) sample means a sample in which Ag and C are contained in a ratio of 3:1 and the amount of the AEI is 50% by weight with respect to the weight of Ag. The Ag/C (1:1) sample means a sample in which Ag and C are contained in a ratio of 1:1 and the amount of the AEI is 200% by weight with respect to the weight of Ag. The result of FIG. 4B showed that the higher the ratio of C to Ag, the higher the CO selectivity.

When considering the above results of FIGS. 4A and 4B, it was confirmed that the CO selectivity was highest in the order of the AgCi electrode catalyst of Example 1, the Agi electrode catalyst of Comparative Example 2, the silver nanoparticle electrode catalyst of Comparative Example 1. It was also confirmed that when the mass ratio of the AEI to the silver nanoparticles was 50%, the highest CO selectivity was exhibited. In addition, it was confirmed that when the mass ratio of the carbon-based mixture to the silver nanoparticles was 100%, the highest CO selectivity was exhibited.

In addition, FIG. 5 is a graph showing the results of a CO selectivity test for the samples of Example 1, in which the samples each independently include the AEIs in an amount of 20% by weight and 200% by weight, with respect to the amount of Ag. Referring to FIG. 5, it was confirmed that for the case in which the amount of carbon used was not changed, when the amount of the anion exchange ionomer was reduced, the CO selectivity was lowered.

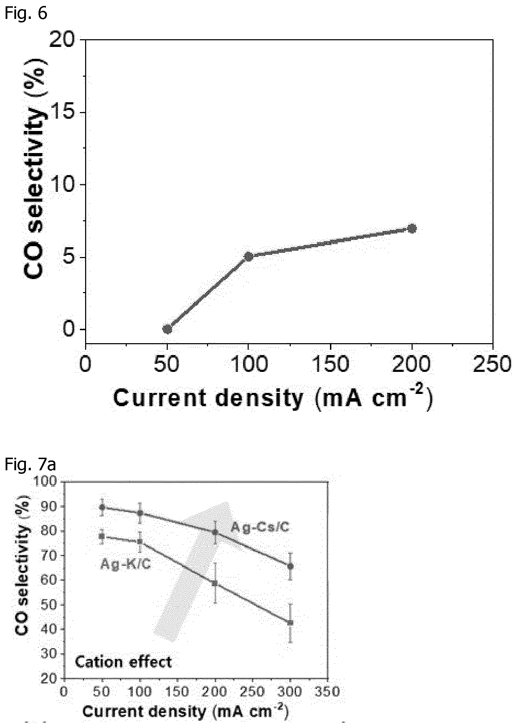

FIG. 6 is a graph showing the results of a CO selectivity test for the sample of Comparative Example 3 in which the cations are not intercalated. Referring to FIG. 6, it was seen that when the sample was not impregnated with K, the CO selectivity was extremely low. That is, it is seen that the intercalation of the cations and the amount of the AEI are significantly important.

### Experimental Example 4: Evaluation result of performance according to types of intercalated cation

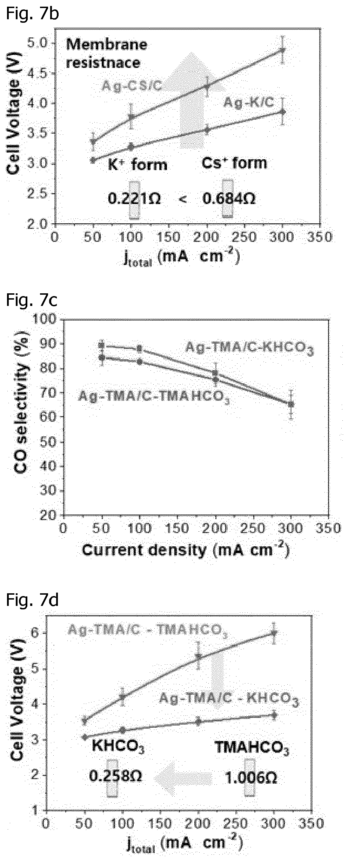

CO selectivity and cell voltage of the catalyst electrode manufactured in Example 2 according to types of electrolyte were measured using a COz conversion device. FIGS. 7A to 7D are graphs showing the results. In FIGS. 7A (CO selectivity) and 7B (cell voltage), each of 0.5 M KHCO₃ and 0.5 M CsHCO₃ is introduced as an electrolyte, and in FIGS. 7C (CO selectivity) and 7D (cell voltage), each of 0.5 M KHCO₃ and 0.05 M tetramethylammonium (TMA) HCO₃ is introduced as an electrolyte.

Referring to FIGS. 7A to 7D, it is confirmed that the greater the amount of the intercalated cations, the higher the stability of a reaction intermediate product and the greater the amount of COz on a periphery of the electrode catalyst, thereby increasing the CO selectivity. On the other hand, it is confirmed that the greater the amount of the intercalated cations, the higher the resistance generated when moving through a cation exchange membrane, thereby increasing operating voltage.

### Experimental Example 5: Evaluation of durability of electrode catalyst

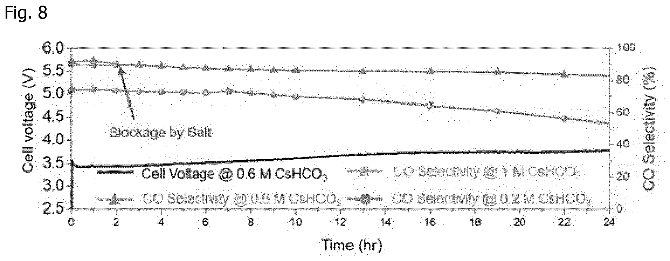

Chronopotentiometry was performed on the catalyst electrode formed in Example 1 in which the sample contained Ag and C in a ratio of 1:1 and the amount of an AEI therein was 200% by weight with respect to the weight of Ag, using a COz conversion device. The results thereof and the measurement results of CO selectivity are shown in FIG. 8. Through the results, durability evaluation was performed, while an evaluation condition was set to constantly introduce a current of 100 mA/cm². A GDL(Gas Diffusion Layer) coated with IrO₂ was used as an anode catalyst. 0.6 M CsHCO₃ was used as an electrolyte and introduced into an anode, and 200 ccm of COz was introduced into a cathode. The cell voltage increased by about 0.2 V from 3.4 V to 3.6 V for 24 hours, and the CO selectivity gradually decreased from the initial level of about 90% to 83%.

Although the preferred embodiments of the present disclosure have been disclosed for illustrative purposes with reference to the drawings and Examples, those skilled in the art will appreciate that various modifications, additions and substitutions are possible, without departing from the scope and spirit of the present disclosure as disclosed in the accompanying claims.

## Claims

1. A COz-reduction membrane electrode assembly (MEA) comprising:
a cathode layer comprising a gas diffusion layer (GDL) and a catalyst layer;
a cation exchange membrane (CEM); and
an anode layer comprising an oxidation catalyst,
wherein the catalyst layer of the cathode layer comprises a reduction catalyst, a carbon-based mixture, an anion exchange ionomer, and a cation.

2. The MEA of claim 1, wherein the reduction catalyst comprises at least one selected from among silver (Ag), gold (Au), zinc (Zn), copper (Cu), and indium (In).

3. The MEA of claim 1 or 2, wherein the reduction catalyst is comprised in an amount in a range of 0.5 mg/cm² to 3 mg/cm².

4. The MEA of any one of claims 1 to 3, wherein the carbon-based mixture comprises at least one selected from among carbon black, carbon nanotubes, graphene, carbon nanofibers, and graphited carbon black.

5. The MEA of any one of claims 1 to 4, wherein the carbon-based mixture is comprised in an amount of 20 parts to 500 parts by weight with respect to 100 parts by weight of the reduction catalyst.

6. The MEA of any one of claims 1 to 5, wherein the anion exchange ionomer is comprised in an amount of 50 parts to 300 parts by weight with respect to 100 parts by weight of the reduction catalyst.

7. The MEA of any one of claims 1 to 6, wherein the cation comprises at least one cation selected from among Na, K, Cs, and tetramethylammonium (TMA).

8. The MEA of any one of claims 1 to 7, wherein the cation is comprised in an amount of 0.01 parts to 5 parts by weight with respect to 100 parts by weight of the reduction catalyst.

9. A COz-reduction assembly comprising the MEA according to any one of claims 1 to 8.

10. A method of manufacturing a COz-reduction membrane electrode assembly (MEA), the method comprising:
preparing a gas diffusion layer;
coating the gas diffusion layer with a solution in which a reduction catalyst, an anion exchange ionomer, and a carbon-based mixture are mixed;
impregnating the gas diffusion that is coated with the reduction catalyst, the anion exchange ionomer, and the carbon-based mixture with a cation solution to form a cathode layer in which a cation is intercalated; and
stacking a cation exchange membrane and an anode layer on the cathode layer.

11. The method of claim 10, wherein the carbon-based mixture is comprised in an amount of 20 parts to 500 parts by weight with respect to 100 parts by weight of the reduction catalyst.

12. The method of claim 10 or 11, wherein the anion exchange ionomer is comprised in an amount of 50 parts to 300 parts by weight with respect to 100 parts by weight of the reduction catalyst.

13. A method of manufacturing a COz-reduction membrane electrode assembly (MEA), the method comprising:
preparing a gas diffusion layer;
coating the gas diffusion layer with a solution in which a reduction catalyst, an anion exchange ionomer, a cation, and a carbon-based mixture are mixed to form a cathode layer; and
stacking a cation exchange membrane and an anode layer on the cathode layer.

14. The method of claim 13, wherein the carbon-based mixture is comprised in an amount of 20 parts to 500 parts by weight with respect to 100 parts by weight of the reduction catalyst.

15. The method of claim 13 or 14, wherein the anion exchange ionomer is comprised in an amount of 50 parts to 300 parts by weight with respect to 100 parts by weight of the reduction catalyst.
